# EUROPÄISCHE PATENTSCHRIFT

(11) **EP 2 238 181 B1**
(45) Veröffentlichungstag und Bekanntmachung des Hinweises auf die Patenterteilung: **12.06.2019**
(21) Anmeldenummer: 09704971.2
(22) Anmeldetag: 26.01.2009
(51) Int. Cl.: C08F 220/06

(54) **VERFAHREN ZUR HERSTELLUNG WASSERABSORBIERENDER POLYMERPARTIKEL**
METHOD FOR THE PRODUCTION OF WATER-ABSORBING POLYMER PARTICLES
PROCÉDÉ DE PRODUCTION DE PARTICULES POLYMÈRES ABSORBANT L'EAU

(30) Priorität: 29.01.2008 EP 08101023
(43) Veröffentlichungstag der Anmeldung: 13.10.2010
(73) Patentinhaber: BASF SE, 67056 Ludwigshafen am Rhein (DE)
(72) Erfinder: HEIDE, Wilfried, 67251 Freinsheim (DE); HECHLER, Claus, 67063 Ludwigshafen (DE); GRIMMON, Marc, Gerardus, Nicolas, B-4634 TM Woensdrecht (BE); MEES, Filip, Lake Jackson Tx 77566 (US); POSSEMIERS, Karl, J., B-2970 Schilde (BE)
(74) Vertreter: BASF IP Association
(86) Internationale Anmeldenummer: PCT/EP2009/050835
(87) Internationale Veröffentlichungsnummer: WO 2009/095370

(56) Entgegenhaltungen:
- EP-A1- 1 384 728
- WO-A1-2006/053731

## Beschreibung

Die vorliegende Erfindung betrifft ein Verfahren zur kontinuierlichen Herstellung wasserabsorbierender Polymerpartikel, wobei das Monomer aus mindestens zwei unterschiedlichen Bezugsquellen stammt.

Die Herstellung wasserabsorbierender Polymerpartikel wird in der Monographie "Modern Superabsorbent Polymer Technology", F.L. Buchholz und A.T. Graham, Wiley-VCH, 1998, Seiten 71 bis 103, beschrieben.

Wasserabsorbierende Polymere werden zur Herstellung von Windeln, Tampons, Damenbinden und anderen Hygieneartikeln, aber auch als wasserzurückhaltende Mittel im landwirtschaftlichen Gartenbau verwendet.

Die WO 2003/051940 A1 offenbart ein Verfahren zur Herstellung wasserabsorbierender Polymerpartikel unter Verwendung einer 0,001 bis 0,016 Gew.-% Hydrochinonmonomethylether enthaltenden Acrylsäure.

WO 2006/053731 A1 lehrt die Verwendung von Acrylsäure mit wenig Allylacrylat und/oder Allylalkohol bei der Herstellung wasserabsorbierender Polymerpartikel.

Bei Polymerisationen haben bereits geringe Mengen von Nebenkomponenten im Monomeren einen erheblichen Einfluss auf die Eigenschaften des Endprodukts. Daher werden die Nebenkomponenten üblicherweise in den Lieferbedingungen spezifiziert. Die Verwendung von Monomeren von unterschiedlichen Lieferanten mit unterschiedlichem Nebenproduktspektrum scheidet daher aus. Andererseits kann es vorteilhaft sein mehr als einen Lieferanten zu haben.

Aufgabe der vorliegenden Erfindung war die Bereitstellung eines verbesserten, insbesondere sicheren, Verfahrens zur Herstellung wasserabsorbierender Polymerpartikel.

Gelöst wurde die Aufgabe durch ein Verfahren zur Herstellung wasserabsorbierender Polymerpartikel durch Polymerisation einer wässrigen Monomerlösung oder -suspension, enthaltend
a) mindestens ein ethylenisch ungesättigtes, säuregruppentragendes Monomer, das zumindest teilweise neutralisiert sein kann,
b) mindestens einen Vernetzer,
c) mindestens einen Initiator,
d) optional ein oder mehrere mit den unter a) genannten Monomeren copolymerisierbare ethylenisch und/oder allylisch ungesättigte Monomere und
e) optional ein oder mehrere wasserlösliche Polymere,
dadurch gekennzeichnet, dass mindestens ein Einsatzstoff aus mindestens zwei Bezugsquellen stammt, sich der Einsatzstoff aus der einen Bezugsquelle im Gehalt mindestens einer Nebenkomponente von dem Einsatzstoff aus mindestens einer anderen Bezugsquelle unterscheidet, der Unterschied im Gehalt der Nebenkomponente mindestens 0,002 Gew.-% beträgt und die Nebenkomponente Essigsäure, Ameisensäure, Propionsäure, 2-Furfural, 3-Furfural, Allylacrylat, Benzaldehyd, Maleinsäureanhydrid, Maleinsäure, Protoanemonin, Acrolein, Formaldehyd oder Benzoesäure ist.

Unterschiedliche Bezugsquellen im Sinne dieser Erfindung können beispielsweise unterschiedliche Lieferanten sein. Es ist aber auch möglich, dass die Monomeren bei einem Lieferanten auf unterschiedliche Weise gereinigt wurden, beispielsweise durch Destillation und Kristallisation, und als unterschiedliche Qualitäten abgegeben werden.

Einsatzstoffe im Sinne dieser Erfindung sind beispielsweise das Monomer a), der Vernetzer b), der Initiator c), das Monomer d) und/oder das Polymer e). Einsatzstoffe im Sinne dieser Erfindung sind aber auch die zur zumindest teilweisen Neutralisation des Monomeren a) verwendeten Basen, insbesondere Natronlauge.

Bei einer kontinuierlichen Herstellung wasserabsorbierender Polymerpartikel im Sinne dieser Erfindung wird die Bezugsquelle mindestens Einsatzstoffes während des laufenden Betriebs verändert, d.h. die Bezugsquelle gewechselt oder ein Einsatzstoff aus einer anderen Bezugsquelle zusätzlich dosiert. Die bisher übliche Abstellung und Neueinstellung der Prozessparameter ist nicht mehr erforderlich.

Bei den Nebenkomponenten handelt es sich um bekannte Nebenkomponenten der Acrylsäure wie Essigsäure, Ameisensäure, Propionsäure, 2-Furfural, 3-Furfural, Allylacrylat, Benzaldehyd, Maleinsäureanhydrid, Maleinsäure, Protoanemonin, Acrolein, Formaldehyd, Benzoesäure oder bei der Herstellung von Acrylsäure verwendete Hilfsmittel und deren Abbauprodukte. Es kann sich aber auch um unbekannte Nebenprodukte handeln, die sich durch eine Veränderung des Anspringverhaltens bei der Polymerisation bemerkbar machen.

Der vorliegenden Erfindung liegt die Erkenntnis zugrunde, dass es möglich ist durch Vorversuche den Einfluss der Nebenkomponenten auf die Polymerisation zu ermitteln und durch Anpassung der Menge an Vernetzer b) und/oder der Menge an Initiator c) diesen Einfluss zu kompensieren.

Eine bevorzugte Leitkomponente für den Gehalt an Nebenkomponenten ist Allylacrylat. Allylacrylat wird bei Destillation und Kristallisation unterschiedlich abgereichert und ist daher ein Indiz für die Vorbehandlung der als Monomer a) verwendeten Acrylsäure.

Der Unterschied im Gehalt der Nebenkomponente zwischen den Monomeren a) der unterschiedlichen Bezugsquellen beträgt mindestens 0,002 Gew.-%, bevorzugt mindestens 0,0035 Gew.-%, besonders bevorzugt mindestens 0,005 Gew.-%, jeweils bezogen auf das Monomer a).

Die Zulassung größerer Unterschiede ermöglicht die Vorsorgung über mehr Bezugsquellen und erhöht damit die Liefersicherheit für das Monomer a).

Bei dem kontinuierlichen Polymerisationsverfahren ändert sich der Gehalt der Nebenkomponente bei einem Wechsel der Bezugsquelle über die Zeit. Die zeitliche Änderung des Gehalts der Nebenkomponente um mindestens 0,002 Gew.-% beträgt vorzugsweise weniger als 24 Stunden, besonders bevorzugt weniger als 12 Stunden, ganz besonders bevorzugt weniger als 6 Stunden.

Die Zulassung schnellerer zeitlicher Änderungen des Gehalts der Nebenkomponente ermöglicht die Verwendung kleinerer Lagertanks für das Monomer a).

Dies ist besonders dann wichtig, wenn nur niedrig stabilisiertes Monomer a), beispielsweise mit weniger als 0,016 Gew.-% Polymerisationsinhibitor, wie Hydrochinonmonomethylether, stabilisiertes Monomer a), gelagert wird.

Es ist aber auch möglich über die Bezugsquellen höher stabilisierte Monomere a) zu beziehen und den Gehalt an Polymerisationsinhibitoren, beispielsweise destillativ, zu senken, d.h. vor der Polymerisation und ggf. vor der Neutralisation.

Bei der vorigen zumindest teilweisen Abtrennung von Polymerisationsinhibitoren ist es vorteilhaft das niedrig stabilisierte Monomer a) in einem Pufferbehälter zwischenzulagern. Damit kann diese Verfahrensstufe zumindest teilweise von der Polymerisation entkoppelt werden.

Aus Sicherheitsgründen sollte der Pufferbehälter aber nicht zu groß gewählt werden, d.h. die Verweilzeit des Monomeren a) im Pufferbehälter beträgt vorzugsweise weniger als 24 Stunden, besonders bevorzugt weniger als 12 Stunden, ganz besonders bevorzugt weniger als 6 Stunden.

Die Monomeren a) sind vorzugsweise wasserlöslich, d.h. die Löslichkeit in Wasser bei 23°C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 50 g/100 g Wasser. Idealerweise sind die Monomere a) in jedem Verhältnis mit Wasser mischbar.

Geeignete Monomere a) sind beispielsweise ethylenisch ungesättigte Carbonsäuren, wie Acrylsäure, Methacrylsäure, Maleinsäure, Fumarsäure und Itaconsäure. Besonders bevorzugte Monomere sind Acrylsäure und Methacrylsäure. Ganz besonders bevorzugt ist Acrylsäure.

Weitere geeignete Monomere a) sind beispielsweise ethylenisch ungesättigte Sulfonsäuren, wie Styrolsulfonsäure und 2-Acrylamido-2-methylpropansulfonsäure (AMPS).

Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%.

Die Monomere a), insbesondere Acrylsäure, enthalten vorzugsweise bis zu 0,025 Gew.-% eines Hydrochinonhalbethers. Bevorzugte Hydrochinonhalbether sind Hydrochinonmonomethylether (MEHQ) und/oder Tocopherole.

Unter Tocopherol werden Verbindungen der folgenden Formel verstanden 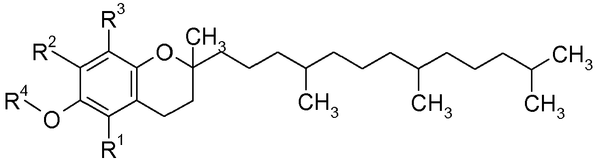 wobei R¹ Wasserstoff oder Methyl, R² Wasserstoff oder Methyl, R³ Wasserstoff oder Methyl und R⁴ Wasserstoff oder ein Säurerest mit 1 bis 20 Kohlenstoffatomen bedeutet.

Bevorzugte Reste für R⁴ sind Acetyl, Ascorbyl, Succinyl, Nicotinyl und andere physiologisch verträgliche Carbonsäuren. Die Carbonsäuren können Mono-, Di- oder Tricarbonsäuren sein.

Bevorzugt ist alpha-Tocopherol mit R¹ = R² = R³ = Methyl, insbesondere racemisches alpha-Tocopherol. R¹ ist besonders bevorzugt Wasserstoff oder Acetyl. Insbesondere bevorzugt ist RRR-alpha-Tocopherol.

Die Monomerlösung enthält bevorzugt höchstens 130 Gew.-ppm, besonders bevorzugt höchstens 70 Gew.-ppm, bevorzugt mindesten 10 Gew.-ppm, besonders bevorzugt mindesten 30 Gew.-ppm, insbesondere um 50 Gew.-ppm, Hydrochinonhalbether, jeweils bezogen auf Acrylsäure, wobei Acrylsäuresalze als Acrylsäure mit berücksichtigt werden. Beispielsweise kann zur Herstellung der Monomerlösung eine Acrylsäure mit einem entsprechenden Gehalt an Hydrochinonhalbether verwendet werden.

Vernetzer b) sind vorzugsweise Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Polyethylenglykoldiacrylat, Allylmethacrylat, Trimethylolpropantriacrylat, Triallylamin, Tetraallylammoniumchlorid, Tetraallyloxyethan, wie in EP 530 438 A1 beschrieben, Di- und Triacrylate, wie in EP 547 847 A1, EP 559 476 A1, EP 632 068 A1, WO 93/21237 A1, WO 2003/104299 A1, WO 2003/104300 A1, WO 2003/104301 A1 und DE 103 31 450 A1 beschrieben, gemischte Acrylate, die neben Acrylatgruppen weitere ethylenisch ungesättigte Gruppen enthalten, wie in DE 103 31 456 A1 und DE 103 55 401 A1 beschrieben, oder Vernetzermischungen, wie beispielsweise in DE 195 43 368 A1, DE 196 46 484 A1, WO 90/15830 A1 und WO 2002/32962 A2 beschrieben.

Geeignete Vernetzer b) sind insbesondere N,N'-Methylenbisacrylamid und N,N'-Methylenbismethacrylamid, Ester ungesättigter Mono- oder Polycarbonsäuren von Polyolen, wie Diacrylat oder Triacrylat, beispielsweise Butandiol- oder Ethylenglykoldiacrylat bzw. -methacrylat sowie Trimethylolpropantriacrylat und Allylverbindungen, wie Allyl(meth)acrylat, Triallylcyanurat, Maleinsäurediallylester, Polyallylester, Tetraallyloxyethan, Triallylamin, Tetraallylethylendiamin, Allylester der Phosphorsäure sowie Vinylphosphonsäurederivate, wie sie beispielsweise in EP 343 427 A2 beschrieben sind. Weiterhin geeignete Vernetzer b) sind Pentaerythritoldi-, Pentaerythritoltri- und Pentaerythritoltetraallylether, Polyethylenglykoldiallylether, Ethylenglykoldiallylether, Glyzerindi- und Glyzerintriallylether, Polyallylether auf Basis Sorbitol, sowie ethoxylierte Varianten davon. Im erfindungsgemäßen Verfahren einsetzbar sind Di(meth)acrylate von Polyethylenglykolen, wobei das eingesetzte Polyethylenglykol ein Molekulargewicht zwischen 100 und 1000 aufweist, beispielsweise Polyethylenglykol-400-diacrylat.

Besonders vorteilhafte Vernetzer b) sind jedoch Di- und Triacrylate des 3- bis 20-fach ethoxylierten Glyzerins, des 3- bis 20-fach ethoxylierten Trimethylolpropans, des 3- bis 20-fach ethoxylierten Trimethylolethans, insbesondere Di- und Triacrylate des 2- bis 6-fach ethoxylierten Glyzerins oder Trimethylolpropans, des 3-fach propoxylierten Glyzerins oder Trimethylolpropans, sowie des 3-fach gemischt ethoxylierten oder propoxylierten Glyzerins oder Trimethylolpropans, des 15-fach ethoxylierten Glyzerins oder Trimethylolpropans, sowie des mindestens 40-fach ethoxylierten Glyzerins, Trimethylolethans oder Trimethylolpropans.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine, wie sie beispielsweise in WO 2003/104301 A1 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3-bis 5-fach ethoxylierten und/oder propoxylierten Glyzerins.

Die Menge an Vernetzer b) beträgt vorzugsweise 0,05 bis 1,5 Gew.-%, besonders bevorzugt 0,1 bis 1 Gew.-%, ganz besonders bevorzugt 0,3 bis 0,6 Gew.-%, jeweils bezogen auf Monomer a).

Als Initiatoren c) können sämtliche unter den Polymerisationsbedingungen in Radikale zerfallende Verbindungen eingesetzt werden, beispielsweise Peroxide, Hydroperoxide, Wasserstoffperoxid, Persulfate, Azoverbindungen und die sogenannten Redoxinitiatoren. Bevorzugt ist der Einsatz von wasserlöslichen Initiatoren. In manchen Fällen ist es vorteilhaft, Mischungen verschiedener Initiatoren zu verwenden, beispielsweise Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden.

Mit den ethylenisch ungesättigten, säuregruppentragenden Monomeren a) copolymerisierbare ethylenisch ungesättigte Monomere d) sind beispielsweise Acrylamid, Methacrylamid, Crotonsäureamid, Hydroxyethylacrylat, Hydroxyethylmethacrylat, Dimethylaminoethylmethacrylat, Dimethylaminoethylacrylat, Dimethylaminopropylacrylat, Diethylaminopropylacrylat, Dimethylaminobutylacrylat, Dimethylaminoethylmethacrylat, Diethylaminoethylmethacrylat, Dimethylaminoneopentylacrylat und Dimethylaminoneopentylmethacrylat.

Als wasserlösliche Polymere e) können Polyvinylalkohol, Polyvinylpyrrolidon, Stärke, Stärkederivate, Polyglykole oder Polyacrylsäuren, vorzugsweise Polyvinylalkohol und Stärke, eingesetzt werden.

Die bevorzugten Polymerisationsinhibitoren benötigen für eine optimale Wirkung gelösten Sauerstoff. Daher kann die Monomerlösung vor der Polymerisation durch Inertisierung, d.h. Durchströmen mit einem inerten Gas, vorzugsweise Stickstoff, von gelöstem Sauerstoff befreit werden. Vorzugsweise wird der Sauerstoffgehalt der Monomerlösung vor der Polymerisation auf weniger als 1 Gew.-ppm, besonders bevorzugt auf weniger als 0,5 Gew.-ppm, gesenkt.

Die Herstellung eines geeigneten Polymers sowie weitere geeignete hydrophile ethylenisch ungesättigte Monomere a) werden in DE 199 41 423 A1, EP 686 650 A1, WO 2001/45758 A1 und WO 2003/104300 A1 beschrieben.

Geeignete Reaktoren sind beispielsweise Knetreaktoren oder Bandreaktoren. Im Kneter wird das bei der Polymerisation einer wässrigen Monomerlösung oder -suspension entstehende Polymergel durch beispielsweise gegenläufige Rührwellen kontinuierlich zerkleinert, wie in WO 2001/38402 A1 beschrieben. Die Polymerisation auf dem Band wird beispielsweise in DE 38 25 366 A1 und US 6,241,928 beschrieben. Bei der Polymerisation in einem Bandreaktor entsteht ein Polymergel, das in einem weiteren Verfahrensschritt zerkleinert werden muss, beispielsweise in einem Fleischwolf, Extruder oder Kneter.

Die Säuregruppen der erhaltenen Hydrogele sind üblicherweise teilweise neutralisiert, vorzugsweise zu 25 bis 95 mol-%, bevorzugt zu 50 bis 80 mol-%, besonders bevorzugt zu 60 bis 75 mol-%, wobei die üblichen Neutralisationsmittel verwendet werden können, vorzugsweise Alkalimetallhydroxide, Alkalimetalloxide, Alkalimetallcarbonate oder Alkalimetallhydrogencarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumcarbonat oder Natriumhydrogencarbonat sowie deren Mischungen.

Die Neutralisation wird vorzugsweise auf der Stufe der Monomeren durchgeführt. Dies geschieht üblicherweise durch Einmischung des Neutralisationsmittels als wässrige Lösung, als Schmelze, oder bevorzugt auch als Feststoff. Beispielsweise kann Natriumhydroxid mit einem Wasseranteil deutlich unter 50 Gew.-% als wachsartige Masse mit einem Schmelzpunkt oberhalb 23°C vorliegen. In diesem Fall ist eine Dosierung als Stückgut oder Schmelze bei erhöhter Temperatur möglich.

Es ist aber auch möglich die Neutralisation nach der Polymerisation auf der Stufe des Hydrogels durchzuführen. Weiterhin ist es möglich bis zu 40 mol-%, vorzugsweise 10 bis 30 mol-%, besonders bevorzugt 15 bis 25 mol-%, der Säuregruppen vor der Polymerisation zu neutralisieren indem ein Teil des Neutralisationsmittels bereits der Monomerlösung zugesetzt und der gewünschte Endneutralisationsgrad erst nach der Polymerisation auf der Stufe des Hydrogels eingestellt wird. Wird das Hydrogel zumindest teilweise nach der Polymerisation neutralisiert, so wird das Hydrogel vorzugsweise mechanisch zerkleinert, beispielsweise mittels eines Fleischwolfes, wobei das Neutralisationsmittel aufgesprüht, übergestreut oder aufgegossen und dann sorgfältig untergemischt werden kann. Dazu kann die erhaltene Gelmasse noch mehrmals zur Homogenisierung gewolft werden.

Das Hydrogel wird dann vorzugsweise mit einem Bandtrockner getrocknet bis der Restfeuchtegehalt vorzugsweise weniger als 15 Gew.-%, besonders bevorzugt weniger als 10 Gew.-%, ganz besonders bevorzugt weniger als 8 Gew.-%, beträgt, wobei der Wassergehalt gemäß der von der EDANA (European Disposables and Nonwovens Association) empfohlenen Testmethode Nr. WSP 230.2-05 "Moisture content" bestimmt wird. Wahlweise kann zur Trocknung aber auch ein Wirbelbetttrockner oder ein beheizter Pflugscharmischer verwendet werden. Um besonders weiße Produkte zu erhalten, ist es vorteilhaft bei der Trocknung dieses Gels einen schnellen Abtransport des verdampfenden Wassers sicherzustellen. Dazu ist die Trocknertemperatur zu optimieren, die Luftzu- und -abführung muss kontrolliert erfolgen, und es ist in jedem Fall auf ausreichende Belüftung zu achten. Die Trocknung ist naturgemäß um so einfacher und das Produkt um so weißer, wenn der Feststoffgehalt des Gels möglichst hoch ist. Bevorzugt liegt der Feststoffgehalt des Gels vor der Trocknung daher zwischen 25 und 80 Gew.-%. Besonders vorteilhaft ist die Belüftung des Trockners mit Stickstoff oder einem anderen nicht-oxidierenden Inertgas. Wahlweise kann aber auch einfach nur der Partialdruck des Sauerstoffs während der Trocknung abgesenkt werden, um oxidative Vergilbungsvorgänge zu verhindern.

Das getrocknete Hydrogel wird hiernach gemahlen und klassiert, wobei zur Mahlung üblicherweise ein- oder mehrstufige Walzenstühle, bevorzugt zwei- oder dreistufige Walzenstühle, Stiftmühlen, Hammermühlen oder Schwingmühlen eingesetzt werden können.

Die mittlere Partikelgröße der als Produktfraktion abgetrennten Polymerpartikel beträgt vorzugsweise mindestens 200 µm, besonders bevorzugt von 250 bis 600 µm, ganz besonders von 300 bis 500 µm. Die mittlere Partikelgröße der Produktfraktion kann mittels der von der EDANA (European Disposables and Nonwovens Association) empfohlenen Testmethode Nr. WSP 220.2-05 "Partikel size distribution" ermittelt werden, wobei die Massenanteile der Siebfraktionen kumuliert aufgetragen werden und die mittlere Partikelgröße graphisch bestimmt wird. Die mittlere Partikelgröße ist hierbei der Wert der Maschenweite, der sich für kumulierte 50 Gew.-% ergibt.

Der Anteil an Partikeln mit einer Partikelgröße von vorzugsweise mindestens 150 µm, besonders bevorzugt mindestens 200 µm, ganz besonders bevorzugt mindestens 250 µm, beträgt vorzugsweise mindestens 90 Gew.-%, besonders bevorzugt mindesten 95 Gew.-%, ganz besonders bevorzugt mindestens 98 Gew.-%.

Der Anteil an Partikeln mit einer Partikelgröße von vorzugsweise höchstens 850 µm, besonders bevorzugt höchstens 700 µm, ganz besonders bevorzugt höchstens 600 µm, beträgt vorzugsweise mindestens 90 Gew.-%, besonders bevorzugt mindesten 95 Gew.-%, ganz besonders bevorzugt mindestens 98 Gew.-%.

Die Polymerpartikel können zur weiteren Verbesserung der Eigenschaften nachvernetzt werden. Geeignete Nachvernetzer sind Verbindungen, die Gruppen enthalten, die mit mindestens zwei Carboxylatgruppen des Polymergels kovalente Bindungen bilden können. Geeignete Verbindungen sind beispielsweise Alkoxysiliylverbindungen, Polyaziridine, Polyamine, Polyamidoamine, Di- oder Polyepoxide, wie in EP 83 022 A2, EP 543 303 A1 und EP 937 736 A2 beschrieben, di- oder polyfunktionelle Alkohole, wie in DE 33 14 019 A1, DE 35 23 617 A1 und EP 450 922 A2 beschrieben, oder β-Hydroxyalkylamide, wie in DE 102 04 938 A1 und US 6,239,230 beschrieben.

Des weiteren sind in DE 40 20 780 C1 zyklische Karbonate, in DE 198 07 502 A1 2-Oxazolidon und dessen Derivate, wie 2-Hydroxyethyl-2-oxazolidon, in DE 198 07 992 C1 Bis- und Poly-2-oxazolidinone, in DE 198 54 573 A1 2-Oxotetrahydro-1,3-oxazin und dessen Derivate, in DE 198 54 574 A1 N-Acyl-2-Oxazolidone, in DE 102 04 937 A1 zyklische Harnstoffe, in DE 103 34 584 A1 bizyklische Amidacetale, in EP 1 199 327 A2 Oxetane und zyklische Harnstoffe und in WO 2003/31482 A1 Morpholin-2,3-dion und dessen Derivate als geeignete Nachvernetzer beschrieben.

Weiterhin können auch Nachvernetzer eingesetzt werden, die zusätzliche polymerisierbare ethylenisch ungesättigte Gruppen enthalten, wie in DE 37 13 601 A1 beschrieben

Die Menge an Nachvernetzer beträgt vorzugsweise 0,001 bis 2 Gew.-%, besonders bevorzugt 0,02 bis 1 Gew.-%, ganz besonders bevorzugt 0,05 bis 0,2 Gew.-%, jeweils bezogen auf das Polymer.

In einer bevorzugten Ausführungsform der vorliegenden Erfindung werden vor, während oder nach der Nachvernetzung zusätzlich zu den Nachvernetzern polyvalente Kationen auf die Partikeloberfläche aufgebracht.

Die im erfindungsgemäßen Verfahren einsetzbaren polyvalenten Kationen sind beispielsweise zweiwertige Kationen, wie die Kationen von Zink, Magnesium, Kalzium, Eisen und Strontium, dreiwertige Kationen, wie die Kationen von Aluminium, Eisen, Chrom, Seltenerden und Mangan, vierwertige Kationen, wie die Kationen von Titan und Zirkonium. Als Gegenion sind beispielsweise Chlorid, Bromid, Sulfat, Hydrogensulfat, Carbonat, Hydrogencarbonat, Nitrat, Phosphat, Hydrogenphosphat, Dihydrogenphosphat und Carboxylat, wie Acetat und Lactat, möglich. Aluminiumsulfat ist bevorzugt. Außer Metallsalzen können auch Polyamine als polyvalente Kationen eingesetzt werden.

Die Einsatzmenge an polyvalentem Kation beträgt beispielsweise 0,001 bis 1,5 Gew.-%, vorzugsweise 0,005 bis 1 Gew.-%, besonders bevorzugt 0,02 bis 0,8 Gew.-%. jeweils bezogen auf das Polymer.

Die Nachvernetzung wird üblicherweise so durchgeführt, dass eine Lösung des Nachvernetzers auf das Hydrogel oder die trockenen Polymerpartikel aufgesprüht wird. Im Anschluss an das Aufsprühen werden die mit dem Nachvernetzer beschichteten Polymerpartikel thermisch getrocknet, wobei die Nachvernetzungsreaktion sowohl vor als auch während der Trocknung stattfinden kann.

Das Aufsprühen einer Lösung des Nachvernetzers wird vorzugsweise in Mischern mit bewegten Mischwerkzeugen, wie Schneckenmischer, Scheibenmischer, Pflugscharmischer und Schaufelmischer, durchgeführt werden. Besonders bevorzugt sind Horizontalmischer, wie Pflugscharmischer und Schaufelmischer, ganz besonders bevorzugt sind Vertikalmischer. Geeignete Mischer sind beispielsweise Lödige-Mischer, Bepex-Mischer, Nauta-Mischer, Processall-Mischer und Schugi-Mischer.

Die Nachvernetzer werden typischerweise als wässrige Lösung eingesetzt. Über den Zusatz an nichtwässrigem Lösungsmittel kann die Eindringtiefe des Nachvernetzers in die Polymerpartikel eingestellt werden.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Bepex-Trockner und Nara-Trockner. Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Besonders vorteilhaft wird in einem Wirbelschichttrockner gemischt und getrocknet.

Bevorzugte Trocknungstemperaturen liegen im Bereich 100 bis 250°C, bevorzugt 120 bis 220°C, besonders bevorzugt 130 bis 210°C, ganz besonders bevorzugt 150 bis 200°C. Die bevorzugte Verweilzeit bei dieser Temperatur im Reaktionsmischer oder Trockner beträgt vorzugsweise mindestens 10 Minuten, besonders bevorzugt mindestens 20 Minuten, ganz besonders bevorzugt mindestens 30 Minuten, und üblicherweise höchstens 60 Minuten.

Anschließend kann das nachvernetzte Polymer erneut klassiert werden.

Die nachvernetzten Polymerpartikel können zur weiteren Verbesserung der Eigenschaften beschichtet oder nachbefeuchtet werden. Geeignete Beschichtungen zur Verbesserung des Akquisitionsverhaltens sowie der Permeabilität (SFC) sind beispielsweise anorganische inerte Substanzen, wie wasserunlösliche Metallsalze, organische Polymere, kationische Polymere sowie zwei- oder mehrwertige Metallkationen. Geeignete Beschichtungen zur Staubbindung sind beispielsweise Polyole. Geeignete Beschichtungen gegen die unerwünschte Verbackungsneigung der Polymerpartikel sind beispielsweise pyrogene Kieselsäure, wie Aerosil® 200, und Tenside, wie Span® 20.

Die gemäß dem erfindungsgemäßen Verfahren erhältlichen wasserabsorbierenden Polymerpartikel weisen einen Wassergehalt von vorzugsweise weniger als 15 Gew.-%, besonders bevorzugt weniger als 10 Gew.-%, ganz besonders bevorzugt weniger als 8 Gew.-%, auf, wobei der Wassergehalt gemäß der von der EDANA (European Disposables and Nonwovens Association) empfohlenen Testmethode Nr. WSP 230.2-05 "Moisture content" bestimmt wird.

Die gemäß dem erfindungsgemäßen Verfahren erhältlichen wasserabsorbierenden Polymerpartikel weisen eine Zentrifugenretentionskapazität (CRC) von typischerweise mindestens 15 g/g, vorzugsweise mindestens 20 g/g, bevorzugt mindestens 22 g/g, besonders bevorzugt mindestens 24 g/g, ganz besonders bevorzugt mindestens 26 g/g, auf. Die Zentrifugenretentionskapazität (CRC) der wasserabsorbierenden Polymerpartikel beträgt üblicherweise weniger als 60 g/g. Die Zentrifugenretentionskapazität (CRC) wird gemäß der von der EDANA (European Disposables and Nonwovens Association) empfohlenen Testmethode Nr. WSP 241.2-05 "Centrifuge retention capacity" bestimmt.

Die gemäß dem erfindungsgemäßen Verfahren erhältlichen wasserabsorbierenden Polymerpartikel weisen eine Absorption unter einem Druck von 0.7psi (4,83 kPa) von typischerweise mindestens 15 g/g, vorzugsweise mindestens 20 g/g, bevorzugt mindestens 22 g/g, besonders bevorzugt mindestens 24 g/g, ganz besonders bevorzugt mindestens 26 g/g, auf. Die Absorption unter einem Druck von 0.7psi (AUL0.7psi) der wasserabsorbierenden Polymerpartikel beträgt üblicherweise weniger als 50 g/g. Die Absorption unter einem Druck von 0.7psi (AUL0.7psi) wird analog der von der EDANA (European Disposables and Nonwovens Association) empfohlenen Testmethode Nr. WSP 242.2-05 "Absorption under pressure" bestimmt, wobei statt eines Drucks von 0.3psi (2,07 kPa) ein Druck von 0.7psi (4,83 kPa) eingestellt wird.

### Beispiel

Durch kontinuierliches Mischen von Wasser, 50 gew.-%iger Natronlauge und Acrylsäure wurde eine 38,8 gew.-%ige Acrylsäure/Natriumacrylatlösung hergestellt, so dass der Neutralisationsgrad 71,3 mol-% betrug. Der Feststoffgehalt der Monomerlösung betrug 38,8 Gew.-%. Die Monomerlösung wurde nach dem Mischen der Komponenten durch einen Wärmetauscher kontinuierlich abgekühlt.

Als mehrfach ethylenisch ungesättigter Vernetzer wird Polyethylenglykol-400-diacrylat verwendet. Die Einsatzmenge betrug 1,3 kg pro t Monomerlösung.

Zur Initiierung der radikalischen Polymerisation wurden folgende Komponenten eingesetzt: Wasserstoffperoxid (1,03 kg (0,25 gew.-%ig) pro t Monomerlösung), Natriumperoxodisulfat (3,10 kg (15 gew.-%ig) pro t Monomerlösung), sowie Ascorbinsäure (1,05 kg (1 gew.-%ig) pro t Monomerlösung).

Der Durchsatz der Monomerlösung betrug 20 t/h.

Die einzelnen Komponenten werden kontinuierlich in einen List Contikneter mit 6.3m³ Volumen (Fa. List, Arisdorf, Schweiz) in folgenden Mengen eindosiert:

| | |
|---|---|
| 20 t/h | Monomerlösung |
| 26 kg/h | Polyethylenglykol-400-diacrylat |
| 82,6 kg/h | Wasserstoffperoxidlösung/Natriumperoxodisulfat-Lösung |
| 21 kg/h | Ascorbinsäurelösung |

Zwischen den Zugabepunkten für Vernetzer und Initiatoren wurde die Monomerlösung mit Stickstoff inertisiert.

Am Ende des Reaktors wurden zusätzlich 1.000 kg/h abgetrenntes Unterkorn mit einer Partikelgröße kleiner 150 µm zudosiert.

Die Reaktionslösung hatte am Zulauf eine Temperatur von 23,5°C. Der Reaktor wurde mit einer Drehzahl der Wellen von 38rpm betrieben. Die Verweilzeit der Reaktionsmischung im Reaktor betrug 15 Minuten.

Nach Polymerisation und Gelzerkleinerung wurde das wässrige Polymergel auf einen Bandtrockner aufgegeben. Die Verweilzeit auf dem Trocknerband betrug ca. 37 Minuten.

Das getrocknete Hydrogel wurde gemahlen und gesiebt.

Die als Monomer a) eingesetzte Acrylsäure war durch Kristallisation gereingt und der Gehalt an Allylacrylat lag unter der Nachweisgrenze von 0,0001 Gew.%.

Während der kontinuierlichen Produktion wurde auch durch Destillation gereinigte Acrylsäure als Monomer a) eingesetzt. Die destillierte Acrylsäure enthielt ca. 0,008 Gew.-% Allylacrylat.

Sowohl die kristallisierte als auch die destillierte Acrylsäure wurden über eine gemeinsame Vorlage in die Neutralisation dosiert. Der Gehalt an Allylacrylat in der Acrylsäure in der Vorlage wurde regelmäßig analysiert. Bei einem Anstieg des Gehalts an Allylacrylat in der Vorlage wurde die Menge an gesenkt, so dass einer Änderung des Gehalts an Allylacrylat um 0,004 Gew.-% einer Änderung der Vernetzermenge um 0,026 kg pro t Monomerlösung entsprach. Durch diese Maßnahme blieb die Zentrifugenretentionskapazität (CRC) der hergestellten wasserabsorbierenden Polymerpartikel innerhalb des 2 g/g breiten Zielbereichs.

## Patentansprüche

1. Verfahren zur kontinuierlichen Herstellung wasserabsorbierender Polymerpartikel durch Polymerisation einer wässrigen Monomerlösung oder -suspension, enthaltend
a) mindestens ein ethylenisch ungesättigtes, säuregruppentragendes Monomer, das zumindest teilweise neutralisiert sein kann,
b) mindestens einen Vernetzer,
c) mindestens einen Initiator,
d) optional ein oder mehrere mit den unter a) genannten Monomeren copolymerisierbare ethylenisch und/oder allylisch ungesättigte Monomere und
e) optional ein oder mehrere wasserlösliche Polymere,
**dadurch gekennzeichnet, dass** mindestens ein Einsatzstoff aus mindestens zwei Bezugsquellen stammt, sich der Einsatzstoff aus der einen Bezugsquelle im Gehalt mindestens einer Nebenkomponente von dem Einsatzstoff aus mindestens einer anderen Bezugsquelle unterscheidet, der Unterschied im Gehalt der Nebenkomponente mindestens 0,002 Gew.-% beträgt und die Nebenkomponente Essigsäure, Ameisensäure, Propionsäure, 2-Furfural, 3-Furfural, Allylacrylat, Benzaldehyd, Maleinsäureanhydrid, Maleinsäure, Protoanemonin, Acrolein, Formaldehyd oder Benzoesäure ist.

2. Verfahren gemäß Anspruch 1, **dadurch gekennzeichnet, dass** der mindestens eine Einsatzstoff das Monomer a) ist.

3. Verfahren gemäß Anspruch 1 oder 2, **dadurch gekennzeichnet, dass** der Unterschied im Gehalt der Nebenkomponente mindestens 0,0035 Gew.-% beträgt.

4. Verfahren gemäß einem der Ansprüche 1 bis 3, **dadurch gekennzeichnet, dass** sich der Gehalt mindestens einer Nebenkomponente des Monomeren a) im Zulauf der Polymerisation während der kontinuierlichen Herstellung der wasserabsorbierenden Polymerpartikel zeitlich ändert.

5. Verfahren gemäß Anspruch 4, **dadurch gekennzeichnet, dass** sich der Gehalt der Nebenkomponente in weniger als 24 Stunden um mindestens 0,002 Gew.-% ändert.

6. Verfahren gemäß einem der Ansprüche 1 bis 5, **dadurch gekennzeichnet, dass** das Monomer a) Acrylsäure ist.

7. Verfahren gemäß einem der Ansprüche 1 bis 6, **dadurch gekennzeichnet, dass** die Nebenkomponente Allylacrylat ist.

8. Verfahren gemäß einem der Ansprüche 1 bis 7, **dadurch gekennzeichnet, dass** das Monomer a) weniger als 0,016 Gew.-% eines Polymerisationsinhibors enthält.

9. Verfahren gemäß Anspruch 8, **dadurch gekennzeichnet, dass** der Polymerisationsinhibitor Hydrochinomonomethylether ist.

10. Verfahren gemäß einem der Ansprüche 1 bis 9, **dadurch gekennzeichnet, dass** das Monomer a) vor der Polymerisation und ggf. vor der Neutralisation destilliert wird.

11. Verfahren gemäß einem der Ansprüche 1 bis 10, **dadurch gekennzeichnet, dass** das Monomer a) vor der Polymerisation und ggf. vor der Neutralisation in einem Pufferbehälter zwischengelagert wird.

12. Verfahren gemäß Anspruch 11, **dadurch gekennzeichnet, dass** die Verweilzeit des Monomeren a) im Pufferbehälter weniger als 24 Stunden beträgt.

13. Verfahren gemäß einem der Ansprüche 1 bis 12, **dadurch gekennzeichnet, dass** bei einer Konzentrationsänderung einer Nebenkomponente im Zulauf der Polymerisation die Menge an Vernetzer b) angepasst wird.

14. Verfahren gemäß einem der Ansprüche 1 bis 13, **dadurch gekennzeichnet, dass** bei einer Konzentrationsänderung einer Nebenkomponente im Zulauf der Polymerisation die Menge an Initiator c) angepasst wird.

15. Verfahren gemäß einem der Ansprüche 1 bis 14, **dadurch gekennzeichnet, dass** das durch Polymerisation erhaltene Polymergel getrocknet, gemahlen, klassiert und optional nachvernetzt wird.

16. Verfahren gemäß einem der Ansprüche 1 bis 15, **dadurch gekennzeichnet, dass** die wasserabsorbierenden Polymerpartikel eine Zentrifugenretentionskapazität von mindestens 15 g/g aufweisen.

## Claims

1. A process for continuously producing water-absorbing polymer particles by polymerizing an aqueous monomer solution or suspension comprising
a) at least one ethylenically unsaturated monomer which bears acid groups and may be at least partly neutralized,
b) at least one crosslinker,
c) at least one initiator,
d) optionally one or more ethylenically and/or allylically unsaturated monomers copolymerizable with the monomers specified under a) and
e) optionally one or more water-soluble polymers,
wherein at least one feedstock stems from at least two sources and the feedstock from one source differs from the feedstock from at least one other source in the content of at least one secondary component, the difference in the content of the secondary component is at least 0.002% by weight, and the secondary component is acetic acid, formic acid, propionic acid, 2-furfural, 3-furfural, allyl acrylate, benzaldehyde, maleic anhydride, maleic acid, protoanemonin, acrolein, formaldehyde or benzoic acid.

2. The process according to claim 1, wherein the at least one feedstock is monomer a).

3. The process according to claim 1 or 2, wherein the difference in the content of the secondary component is at least 0.0035% by weight.

4. The process according to any of claims 1 to 3, wherein the content of at least one secondary component of monomer a) in the feed of the polymerization changes with time during the continuous production of the water-absorbing polymer particles.

5. The process according to claim 4, wherein the content of the secondary component changes by at least 0.002% by weight within less than 24 hours.

6. The process according to any of claims 1 to 5, wherein monomer a) is acrylic acid.

7. The process according to any of claims 1 to 6, wherein the secondary component is allyl acrylate.

8. The process according to any of claims 1 to 7, wherein monomer a) comprises less than 0.016% by weight of a polymerization inhibitor.

9. The process according to claim 8, wherein the polymerization inhibitor is hydroquinone monomethyl ether.

10. The process according to any of claims 1 to 9, wherein monomer a) is distilled before the polymerization and if appropriate before the neutralization.

11. The process according to any of claims 1 to 10, wherein monomer a) is stored intermediately in a buffer vessel before the polymerization and if appropriate before the neutralization.

12. The process according to claim 11, wherein the residence time of the monomer a) in the buffer vessel is less than 24 hours.

13. The process according to any of claims 1 to 12, wherein the amount of crosslinker b) is adjusted in the case of a change in concentration of a secondary component in the feed to the polymerization.

14. The process according to any of claims 1 to 13, wherein the amount of initiator c) is adjusted in the case of a change in concentration of a secondary component in the feed to the polymerization.

15. The process according to any of claims 1 to 14, wherein the polymer gel obtained by polymerization is dried, ground, classified and optionally postcrosslinked.

16. The process according to any of claims 1 to 15, wherein the water-absorbing polymer particles have a centrifuge retention capacity of at least 15 g/g.

## Revendications

1. Procédé de fabrication continue de particules polymères absorbant l'eau par polymérisation d'une solution ou suspension aqueuse de monomères, contenant :
a) au moins un monomère éthyléniquement insaturé, portant des groupes acides, qui peut être au moins partiellement neutralisé,
b) au moins un agent de réticulation,
c) au moins un initiateur,
d) éventuellement un ou plusieurs monomères éthyléniquement et/ou allyliquement insaturés copolymérisables avec les monomères indiqués en a), et
e) éventuellement un ou plusieurs polymères solubles dans l'eau,
**caractérisé en ce qu'**au moins une matière première provient d'au moins deux sources d'approvisionnement, la matière première provenant d'une source d'approvisionnement différant au niveau de la teneur en au moins un composant secondaire de la matière première provenant de ladite au moins une autre source d'approvisionnement, la différence au niveau de la teneur du composant secondaire étant d'au moins 0,002 % en poids, et le composant secondaire étant l'acide acétique, l'acide formique, l'acide propionique, le 2-furfural, le 3-furfural, l'acrylate d'allyle, le benzaldéhyde, l'anhydride de l'acide maléique, l'acide maléique, la protoanémonine, l'acroléine, le formaldéhyde ou l'acide benzoïque.

2. Procédé selon la revendication 1, **caractérisé en ce que** ladite au moins une matière première est le monomère a).

3. Procédé selon la revendication 1 ou 2, **caractérisé en ce que** la différence au niveau de la teneur du composant secondaire est d'au moins 0,0035 % en poids.

4. Procédé selon l'une quelconque des revendications 1 à 3, **caractérisé en ce que** la teneur en au moins un composant secondaire du monomère a) varie avec le temps au cours de la polymérisation pendant la fabrication continue des particules polymères absorbant l'eau.

5. Procédé selon la revendication 4, **caractérisé en ce que** la teneur du composant secondaire varie d'au moins 0,002 % en poids en moins de 24 heures.

6. Procédé selon l'une quelconque des revendications 1 à 5, **caractérisé en ce que** le monomère a) est l'acide acrylique.

7. Procédé selon l'une quelconque des revendications 1 à 6, **caractérisé en ce que** le composant secondaire est l'acrylate d'allyle.

8. Procédé selon l'une quelconque des revendications 1 à 7, **caractérisé en ce que** le monomère a) contient moins de 0,016 % en poids d'un inhibiteur de polymérisation.

9. Procédé selon la revendication 8, **caractérisé en ce que** l'inhibiteur de polymérisation est l'éther monométhylique d'hydroquinone.

10. Procédé selon l'une quelconque des revendications 1 à 9, **caractérisé en ce que** le monomère a) est distillé avant la polymérisation et éventuellement avant la neutralisation.

11. Procédé selon l'une quelconque des revendications 1 à 10, **caractérisé en ce que** le monomère a) est entreposé dans un contenant tampon avant la polymérisation et éventuellement avant la neutralisation.

12. Procédé selon la revendication 11, **caractérisé en ce que** le temps de séjour du monomère a) dans le contenant tampon est de moins de 24 heures.

13. Procédé selon l'une quelconque des revendications 1 à 12, **caractérisé en ce que** la quantité d'agent de réticulation b) est adaptée lors d'une modification de concentration d'un composant secondaire au cours de la polymérisation.

14. Procédé selon l'une quelconque des revendications 1 à 13, **caractérisé en ce que** la quantité d'initiateur c) est adaptée lors d'une modification de la concentration d'un composant secondaire au cours de la polymérisation.

15. Procédé selon l'une quelconque des revendications 1 à 14, **caractérisé en ce que** le gel polymère obtenu par la polymérisation est séché, broyé, classifié et éventuellement post-réticulé.

16. Procédé selon l'une quelconque des revendications 1 à 15, **caractérisé en ce que** les particules polymères absorbant l'eau présentent une capacité de rétention centrifuge d'au moins 15 g/g.
